# EUROPEAN PATENT APPLICATION

(11) **EP 2 439 967 A1**
(43) Date of publication of application: **11.04.2012**
(21) Application number: 10785705.4
(22) Date of filing: 18.05.2010
(51) Int. Cl.: H04W 4/18

(54) **METHOD AND DEVICE FOR FORWARD TRANSFERRING ROUTER REQUEST MESSAGE**

(30) Priority: 08.06.2009 CN 200910147211
(71) Applicant: ZTE Corporation, Shenzhen, Guangdong 518057 (CN)
(72) Inventor: LIU, Zhenhua, Shenzhen Guangdong 518057 (CN)
(74) Representative: Jansen, Cornelis Marinus
(86) International application number: PCT/CN2010/072885
(87) International publication number: WO 2010/142192

(57) **Abstract**

The disclosure discloses a method for forward transferring a routing request message, comprising: receiving, by a second network, a routing request message sent by a first network; acquiring a terminal identification to which a target mobile terminal corresponds carried in the routing request message; adding a network identification of third network in the routing request message when it is determined that the target mobile terminal has become a user of the third network according to the terminal identification to which the target mobile terminal corresponds, and sending the routing request message added with the network identification of the third network to the third network. The disclosure also discloses a device for forward transferring a routing request message. By adopting the disclosure, the signaling process can be optimized and the efficiency of the system can be improved.

## Description

### TECHNICAL FIELD

The disclosure relates to the field of communications and in particular to a method and device for forward transferring a routing request message.

### BACKGROUND

In addition of the telephone service and data bearer service, the Public Land Mobile Network (PLMN) can also provide a convenient, effective and economical means for information notification, called short message service, for the user. By using the short message service, a mobile station terminal with small volume can independently send or receive a character message with a limited length without the help of devices such as a fax machine or a computer, and can directly display the message content on a display.

The short message service is a significant application of Signaling Protocol 7. Being one of the key technologies of the modern communication network, the Signaling System 7 is an inter-office common channel signaling system designed and applied based on the idea of Open System Interconnection (OSI) layering. The layered structure of the Signaling Protocol 7 related to short message application includes several parts as follows from the downside to the upside: a Message Transfer Part (MTP), a Signaling Connection Control Part (SCCP), a Transaction Capabilities Application Part (TCAP), and a Mobile Application Part (MAP). The first three parts are responsible for transmission, routing establishment and organization management of the Signaling 7 and providing an application interface; and the MAP part involves the functions related to the short message service.

The short message service is mainly sorted into two types as follows: point-to-point service and cell broadcast. The point-to-point service realizes the transmission of short messages between users in the radio system and a Short Message Service Center (SMSC) is required for forwarding. The point-to-point short message service includes three basic service units as follows: a Short Message Mobile Originate (SM-MO) service unit, a Short Message Mobile Terminated (SM-MT) service unit and a Short Message Alert (SM-Alert) service unit, wherein the Short Message Mobile Terminated service unit will trigger a routing request process (i.e., Send Routing Information, SRI), that is to say, the Short Message Service Center requests the routing address of the termination (i.e. the address of the Mobile Switching Center (MSC) servicing the called user) from Home Location Register (HLR), and terminated-calls the short message to the MSC after the routing response arrives.

Number portability, as the term suggests, aims to realize maintenance on original number when a certain user originally belongs to a local operator has become a user belongs to an other operator; and the idea of realizing this function in the prior art is as follows:
1. each operator adds a Number Portability Database (NPDB) network element and number portability information of a certain user can be acquired by inquiring the NPDB;
2. only the number portability information of users relevant to the local operator is stored in the NPDB of each operator, so that not the number portability information of all the users of all the operators can be inquired, wherein there are two types of number portability information stored in the NPDB: portability information of user number section belongs to the local operator; and information that the number section of an outer network brings to the local network;
3. when the target user of the terminated call initiated by a certain operator failed to inquire the number portability information in the NPDB of the operator, sends a routing request message to the operator to which the number section of the target user belongs, and carries on the terminated call after receiving a returned routing response message, wherein the routing request message and the routing response message are both transmitted to the target network by using the Global Title (GT) addressing, if add no network identification in the front of the number of a target user, addresses directly to the network to which the target user belongs, and if the network identification exists in the front of the number of a target user, addresses to the network represented by the network identification;
4. after receiving a routing request message from network A, a certain operator firstly inquires its own NPDB, if the target user is the user belongs to the local network, modifies the routing address in the routing response as the number of the local short message service center and returns the routing response to the network A; if the target user has transferred to network B carrying a number, the local short message service center initiates a routing request process to the network B, after acquiring the routing address in the routing response returned by the network B, the local short message service center returns the routing address returned by the network B in the received routing response to the short message service center of the network A in response to the routing request process of the network A; then, the short message service center of the network A initiates a terminated call to the MSC of the network B.

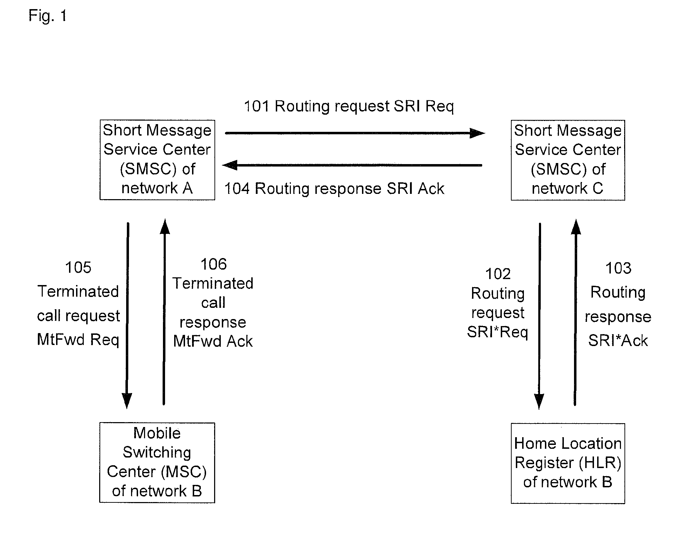

In step 4, if the user has transferred to the network B carrying its number, the short message service center of the local network now then actually plays the role of a HLR of the network B; providing that the local network is the network C, the specific processing process is shown as in Fig. 1:
step 101, SMSC of the network A sends a routing request message SRI Req to SMSC of the network C according to the number of target mobile terminal;
step 102, after receiving the SRI Req sent from the network A, the SMSC of the network C inquires the NPDB of the network C and acquires that the target mobile terminal has transferred to the network B carrying a number; the network C additionally initiates a routing request message SRI*Req to inquire for the address of the MSC of the network B from HLR of the network B;
step 103, the network C receives the routing response message SRI*Ack fed back by the HLR of the network B;
step 104, the network C feeds back a routing response message SRI Ack to the SMSC of the network A according to the SRI*Ack fed back by the network B, wherein the SRI Ack carries the address of the MSC of the network B fed back by the HLR of the network B;
step 105, after receiving the routing response fed back by the network C, the network A initiates a terminated call request MtFwd Req to the MSC of the network B; and
step 106, after receiving the MtFwd Req initiated by the network A, the network B feeds back a terminated call response MtFwd Ack to the SMSC of the network A and sets up a conversation.
In the signaling processing process as shown in Fig. 1, it is relatively complex to realize the signaling process, which will increase the signaling processing load of the home network short message service center, occupy more system resource and reduce the system efficiency.

### SUMMARY

Embodiments of the disclosure provide a method and device for forward transferring a routing request message in order to solve the problem of complexity in realization of a signaling process in the prior art.

In order to solve above mentioned problem, the technical solution of the disclosure is realized as the following.

A method for forward transferring a routing request message is provided, comprising:
receiving, by a second network, a routing request message sent by a first network;
acquiring a terminal identification to which a target mobile terminal corresponds carried in the routing request message; and
adding a network identification of third network in the routing request message when it is determined that the target mobile terminal has become a user of the third network according to the terminal identification to which the target mobile terminal corresponds, and sending the routing request message added with the network identification of the third network to the third network.

Determining that the target mobile terminal has become the user of the third network according to the terminal identification to which the target mobile terminal corresponds may comprise:
inquiring a local number portability database by the second network according to the terminal identification to which the target mobile terminal corresponds and determining that the target mobile terminal has become to the user of the third network, wherein
the local number portability database stores information that a mobile terminal originally belongs to a local network becomes a user of another network, and information that a mobile terminal originally belongs to another network becomes a user of the local network.

Adding the network identification of the third network in the routing request message may specifically comprise:
adding the network identification of the third network in the front of the terminal identification to which the target mobile terminal corresponds carried in the routing request message; or
adding the network identification of the third network behind the terminal identification to which the target mobile terminal corresponds carried in the routing request message; or
adding the network identification of the third network among the terminal identification to which the target mobile terminal corresponds carried in the routing request message.

After sending the routing request message added with the network identification of the third network to the third network, the method further comprises:
determining, by the third network, that the received routing request message is sent by the first network according to the terminal identification to which a source mobile terminal corresponds carried in the received routing request message, and returning a routing response message to the first network.

The method further comprises:
returning a routing response message, by the second network to the first network, when the target mobile terminal is a user of the second network.

The method further comprises: receiving, by a short message service center of the second network, a routing request message sent by a short message service center of the first network;
acquiring, by the short message service center of the second network, the terminal identification to which the target mobile terminal corresponds carried in the routing request message; and
adding the network identification of the third network in target addressing information in the routing request message when it is determined that the target mobile terminal has become the user of the third network according to the terminal identification to which the target mobile terminal corresponds, and sending the routing request message added with the network identification of the third network to a home location register of the third network.

A device for forward transferring a routing request message is provided, comprising: a reception module, an acquisition module, a determination module and a forward transferring module, wherein
the reception module is arranged for receiving a routing request message sent by a first network;
the acquisition module is arranged for acquiring a terminal identification to which a target mobile terminal corresponds carried in the routing request message;
the determination module is arranged for starting up the forward transferring module when it is determined that the target mobile terminal has become a user of a third network according to the terminal identification to which the target mobile terminal corresponds; and
the forward transferring module is arranged for adding a network identification of the third network in the routing request message and sending the routing request message added with the network identification of the third network to the third network.

The determination module may be arranged for:
inquiring a local number portability database according to the terminal identification to which the target mobile terminal corresponds, and determining that the target mobile terminal has become the user of the third network, wherein
the local number portability database stores information that a mobile terminal originally belongs to a local network becomes a user of another network, and information that a mobile terminal originally belongs to another network becomes a user of the local network.

The forward transferring module may be arranged for:
adding the network identification of the third network in the front of the terminal identification to which the target mobile terminal corresponds carried in the routing request message; or
adding the network identification of the third network behind the terminal identification to which the target mobile terminal corresponds carried in the routing request message; or
adding the network identification of the third network among the terminal identification to which the target mobile terminal corresponds carried in the routing request message.

The device further comprises a feedback module;
the determination module may be further arranged for starting up the feedback module when it is determined that the target mobile terminal is a user of the second network; and
the feedback module may be arranged for returning a routing response message to the first network.

In embodiments of the disclosure, after receiving the routing request message sent from the first network, the second network acquires the terminal identification to which the target mobile terminal corresponds carried in the routing request message; when it is determined that the target mobile terminal has become the user of the third network according to the terminal identification of the target mobile terminal, the network identification of the third network is added into the routing request message and the routing request message added with the network identification of the third network is sent to the third network, therefore, it is not required to acquire the relevant information (such as address of MSC) of the third network from the third network by the second network and forward the acquired relevant information to the first network by the second network, so that the signaling process is optimized, the signaling processing load of the second network is lightened and the efficiency of the system is improved.

### BRIEF DESCRIPTION OF THE DRAWINGS

Fig. 1 shows a signaling diagram in a forward transferring process in the prior art;
Fig. 2 shows a flowchart of an optimized forward transferring of the routing request message according to the embodiment of the disclosure;
Fig. 3 shows a signaling diagram in the simplified forward transferring process according to the embodiment of the present invention;
Fig. 4 shows a flowchart of signalling transferring in simplified forward transferring process according to the embodiment of the present invention; and
Fig. 5 and Fig. 6 are the structural diagrams of the device for forward transferring the routing request message in the embodiment of the present invention.

### DETAILED DESCRIPTION

In the embodiments of the present invention, in order to optimize the signaling process and improve the efficiency of the system, a method for forward transferring a routing request message is disclosed. The method specifically comprises: after receiving a routing request message sent from the first network, the second network acquires a terminal identification to which the target mobile terminal corresponds carried in the routing request message; when it is determined that the target mobile terminal has become a user of the third network according to the terminal identification to which the target mobile terminal corresponds, a network identification of the third network is added into the routing request message and the routing request message added with the network identification of the third network is sent to the third network.

In one embodiment, when the target mobile terminal is still a user of the second network, the second network directly returns a routing response message to the first network.

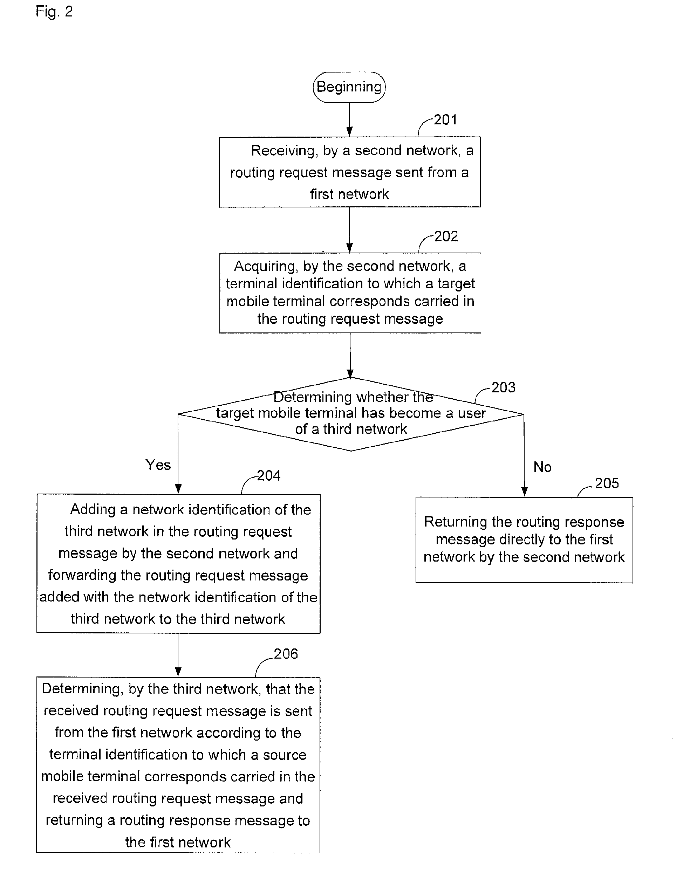

Based on the above mentioned method, a flowchart of the optimized signaling process according to the embodiment of the disclosure, as shown in Fig. 2, comprises:
step 201, receiving, by the second network, the routing request message sent from the first network;
step 202, acquiring, by the second network, the terminal identification to which the target mobile terminal corresponds carried in the routing request message;
step 203, determining if the target mobile terminal has become the user of the third network; if so, executing step 204; otherwise, executing step 205;
step 204, adding, by the second network, the network identification of the third network in the routing request message, and forwarding, by the second network, the routing request message added with the network identification of the third network to the third network; and
step 205, returning, by the second network, the routing response message directly to the first network.

In the flow shown in Fig. 2, during executing step 201, after the second network receives the routing request message sent from the first network, the cache mechanism of the second network may be utilized to store the routing request message so as to guarantee the completeness and correctness of the routing request message.

In the flow shown in Fig. 2, during executing step 202, the second network analyzes the received routing request message and acquires the terminal identification of the target mobile terminal from the target addressing information acquired from the analysis; however, during the implementation, the second network can also acquire the terminal identification of the target mobile terminal from other information, but not limited to the target addressing information.

In the flow shown in Fig. 2, during executing step 203, the second network determines whether the terminal identification to which the target mobile terminal corresponds has transferred to the third network by inquiring the local number portability database. During the implementation, the local number portability database of each network stores information that the mobile terminal originally belongs to the local network becomes the user of another network, and information that the mobile terminal originally belongs to another network becomes the user of the local network. The second network inquires the local number portability database so as to know the target mobile terminal has become a user of which specific network or the target mobile terminal is still the user of the second network.

In the flow shown in Fig. 2, during executing step 204, the second network determines that the target mobile terminal has become the user of the third network according to a inquiring result, and adds the network identification of the third network in the routing request message, wherein there are several ways for the adding, for example, adding the network identification of the third network in the front of the terminal identification to which the target mobile terminal corresponds; adding the network identification of the third network behind the terminal identification to which the target mobile terminal corresponds; or adding the network identification of the third network among the terminal identification to which the target mobile terminal corresponds; and the specific implementation way is determined based on the specific situation.

In the flow shown in Fig. 2, after executing step 204, step 206 is triggered: determining, by the third network, that the received routing request message is sent from the first network according to the terminal identification to which the source mobile terminal corresponds carried in the received routing request message and returning routing response message to the first network.

In the embodiments of the disclosure, the first network, the second network and the third network are only mean to distinguish three different networks, but not limited to three designated networks and are changeable at any time.

During the implementation, there are several kinds of network identifications, such as a network name, a network serial number and the like, and a preferable choice therein is to use a routing number (RN) as the network identification.

During the implementation, in the short message service, the short message service center sends or receives the routing request message, feeds back the address of the MSC of the network where the target mobile terminal is located to the originated network through routing response message. The specific implementation way is described below.

The short message service center of the second network receives the routing request message sent from the short message service center of the first network and acquires the terminal identification to which the target mobile terminal corresponds carried in the routing request message; when it is determined that the target mobile terminal has become the user of the third network according to the terminal identification to which the target mobile terminal corresponds, the network identification of the third network is added into the routing request message, and the routing request message added with the network identification of the third network is forwarded to the home location register of the third network.

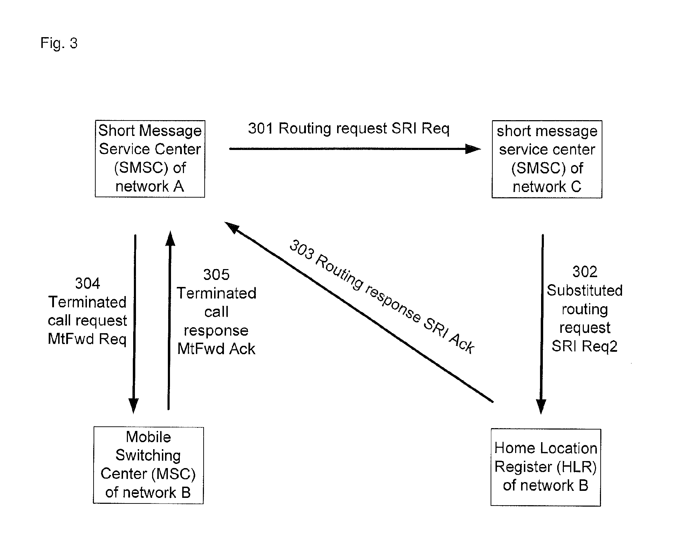

Illustration is performed by taking a specific embodiment of the short message service for example; for easy comparison with the prior art, it is supposed that the first network is network A, the second network is network C, the third network is network B, the terminal identification is terminal number, and the network identification is RN, further, the mobile terminal 01 in the network A originates a call, the target mobile terminal is mobile terminal 02; the original home network of the number of 02 is the network C, and the current home network thereof becomes the network B; it is supposed that the RN of the network B is 1111; and the specific processing flow is, as shown in Fig. 3:
step 301, sending a routing request message SRI Req by the SMSC of the network A to the SMSC of the network C according to the number of 02;
step 302, after the SMSC of the network C has received the SRI Req sent from the network A, inquiring the NPDB of local network according to the number of 02; when knowing that 02 has become the user of the network B, adding the RN number 1111 of the network B in the front of the number of 02 so as to obtain an updated number of 02, for example, providing that the original number of the target mobile terminal 02 is 13611527804, an updated number is 111113611527804; modifying the target addressing information in the above described routing request message by using the updated number of 02; and sending a modified routing request message SRI Req2 to the network B;
step 303, after the network B has received the SRI Req2 sent from the network C, determining that the SRI Req2 is sent from the network A according to the source addressing information of the SRI Req2, and directly feeding back a routing response message SRI Ack to the SMSC of the network A;
step 304, after the network A has received the SRI Ack fed back by the network C, acquiring the address of the MSC of the network B, and further initiating a terminated call request MtFwd Req to the MSC of the network B;
step 305, after the network B has received the MtFwd Req initiated by the network A, feeding back a terminated call response MtFwd Ack to the SMSC of the network A, and setting up a conversation.

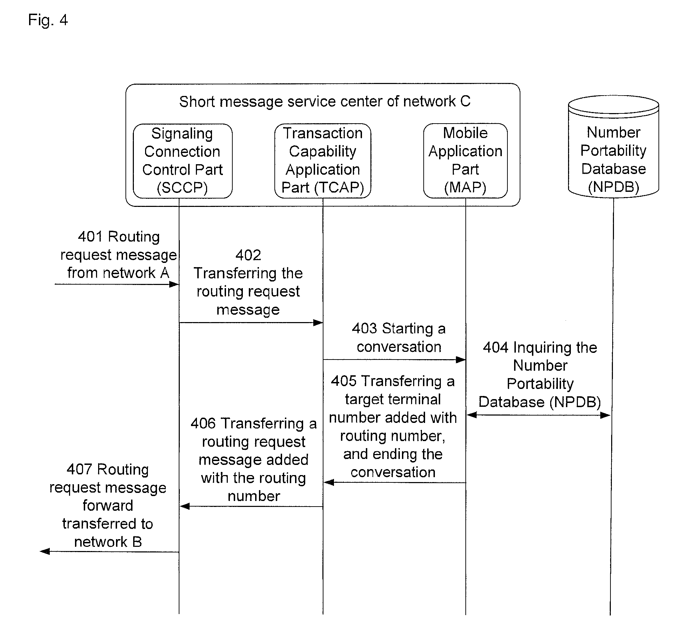

During the implementation, according to the Signaling Protocol 7, the specific signaling transferring and processing procedure in the embodiment is, as shown in Fig. 4:
step 401, receiving, by a Signaling Connection Control Part (SCCP) layer of the SMSC of the network C, a routing request message initiated by the SMSC of the network A;
step 402, sending a primitive N_UniData_Ind including the routing request message by the SCCP layer to a Transaction Capabilities Application Part (TCAP) layer;
step 403, performing incomplete decoding for the received primitive N_UniData_Ind, identifying the routing request message and storing the message in a cache region of the TCAP by the TCAP layer; sending a primitive TC_Begin and a primitive TC_Invoke, starting the conversation and sending the routing request message to a Mobile Application Part (MAP) layer;
step 404, inquiring the NPDB aiming at the number of 02 by the MAP layer, and finding that the 02 has become the user of the network B, adding the RN number 1111 of the network B in the front of the number of 02, and in this embodiment, the routing request message can be delivered to an HLR of the network B by using the number added with the RN of the network B for the target Global Title (GT) addressing;
step 405, sending a TC_Uni_End message by the MAP layer to the TCAP; transferring the number of the 02 added with the RN number of the network B to the TCAP layer by using the message; ending the conversation and triggering the TCAP layer to send the substituted routing request message to bottom layer;
step 406, initiating a primitive request N_UniData_Req by the TCAP layer to the SCCP layer and sending the substituted routing request message to the SCCP layer; and
step 407, performing GT addressing by the SCCP layer by using the number of the target mobile terminal added with the RN number of the network B; and forward transferring the substituted routing request message to the HLR of the network B.

In the flow shown in Fig. 4, during executing step 403, the TCAP layer performs incomplete decoding for the received primitive N_UniData_Ind and identifies whether the received message is the routing request message according to the operating code obtained from the incomplete decoding, for example, the operating code of the routing request message is 0x2D, the operating code of the originate call and the terminated call is 0x2E, and the operating code of the short message alert is 0x31, etc.

In the flow shown in Fig. 4, during executing step 407, the routing request message forward transferred to the HLR of the network B, compared with the routing request message sent by the network A, only has the target addressing information modified, and other information (such as source addressing information) are completely the same; therefore, after receiving the routing request message, the network B may determine that the routing request message is sent by the network A according to the source addressing information.

The above mentioned embodiment relates to the short message service, but the method provided by the embodiments of the disclosure is not limited to the short message service; other network-crossing related services in the communication field can be implemented by using the scheme of the flow as shown in Fig. 2.

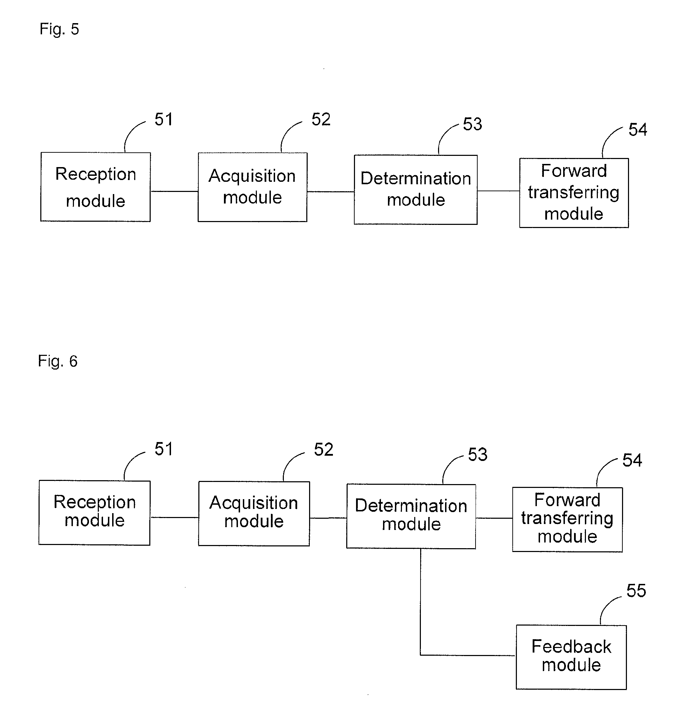

Based on the same inventive conception, the embodiment of the present invention further provides a device for forward transferring a routing request message, as shown in Fig. 5, comprising: a reception module 51, an acquisition module 52, a determination module 53 and a forward transferring module 54, wherein
the reception module 51 is arranged for receiving a routing request message sent from a first network;
the acquisition module 52 is arranged for acquiring a terminal identification to which a target mobile terminal corresponds carried in the routing request message;
the determination module 53 is arranged for starting up the forward transferring module 54 when it is determined that the target mobile terminal has become a user of a third network according to the terminal identification to which the target mobile terminal corresponds; and
the forward transferring module 54 is arranged for adding a network identification of the third network in the routing request message and sending the routing request message added with the network identification of the third network to the third network.

In one embodiment, the determination module 53 is further arranged for:
inquiring a local number portability database according to the terminal identification to which the target mobile terminal corresponds and determining that the target mobile terminal has become the user of the third network, wherein
the local number portability database stores information that a mobile terminal originally belongs to a local network becomes a user of another network, and information that a mobile terminal originally belongs to another network becomes a user of the local network.

In one embodiment, the forward transferring module 54 is further arranged for:
adding the network identification of the third network in the front of the terminal identification to which the target mobile terminal corresponds carried in the routing request message;
adding the network identification of the third network behind the terminal identification to which the target mobile terminal corresponds carried in the routing request message; or
adding the network identification of the third network among the terminal identification to which the target mobile terminal corresponds carried in the routing request message.

In one embodiment, as shown in Fig. 6, the device for forward transferring the routing request message may further comprise a feedback module 55;
the determination module 53 is further arranged for starting up the feedback module 55 when it is determined that the target mobile terminal is a user of the second network; and
the feedback module 55 is arranged for returning a routing response message to the first network.

In the embodiments of the disclosure, after receiving the routing request message sent by the first network, the second network acquires the terminal identification to which the target mobile terminal corresponds carried in the routing request message; when it is determined that the target mobile terminal has become the user of the third network according to the terminal identification to which the target mobile terminal corresponds, the network identification of the third network is added into the routing request message and the routing request message added with the network identification of the third network is sent to the third network, therefore, it is not required to acquire the relevant information (such as the address of the MSC) of the third network from the third network by the second network and forward the acquired relevant information to the first network by the second network, so that the signaling process is optimized, the signaling processing load of the second network is lightened and the efficiency of the system is improved.

Obviously, those skilled in the art can perform various modifications and variations to the disclosure without departing from the spirit and scope of the disclosure. Thus, if the modifications and variations of the disclosure fall in the scope of the claims of the disclosure and the equivalent technique thereof, the modifications and variations shall fall into the scope of the disclosure.

## Claims

1. A method for forward transferring a routing request message, comprising:
receiving, by a second network, a routing request message sent by a first network;
acquiring a terminal identification to which a target mobile terminal corresponds carried in the routing request message; and
adding a network identification of third network in the routing request message when it is determined that the target mobile terminal has become a user of the third network according to the terminal identification to which the target mobile terminal corresponds, and sending the routing request message added with the network identification of the third network to the third network.

2. The method according to claim 1, wherein determining that the target mobile terminal has become the user of the third network according to the terminal identification to which the target mobile terminal corresponds, comprises:
inquiring a local number portability database by the second network according to the terminal identification to which the target mobile terminal corresponds and determining that the target mobile terminal has become the user of the third network, wherein
the local number portability database stores information that a mobile terminal originally belongs to a local network becomes a user of another network, and information that a mobile terminal originally belongs to another network becomes a user of the local network.

3. The method according to claim 1, wherein adding the network identification of the third network in the routing request message specifically comprises:
adding the network identification of the third network in the front of the terminal identification to which the target mobile terminal corresponds carried in the routing request message; or
adding the network identification of the third network behind the terminal identification to which the target mobile terminal corresponds carried in the routing request message; or
adding the network identification of the third network among the terminal identification to which the target mobile terminal corresponds carried in the routing request message.

4. The method according to any one of claims 1 to 3, after sending the routing request message added with the network identification of the third network to the third network, the method further comprising:
determining, by the third network, that the received routing request message is sent by the first network according to the terminal identification to which a source mobile terminal corresponds carried in the received routing request message, and returning a routing response message to the first network.

5. The method according to any one of claims 1 to 3, further comprising:
returning a routing response message, by the second network to the first network, when the target mobile terminal is a user of the second network.

6. The method according to claim 1, further comprising: receiving, by a short message service center of the second network, a routing request message sent by a short message service center of the first network;
acquiring, by the short message service center of the second network, the terminal identification to which the target mobile terminal corresponds carried in the routing request message; and
adding the network identification of the third network in target addressing information in the routing request message when it is determined that the target mobile terminal has become the user of the third network according to the terminal identification to which the target mobile terminal corresponds, and sending the routing request message added with the network identification of the third network to a home location register of the third network.

7. A device for forward transferring a routing request message, comprising: a reception module, an acquisition module, a determination module and a forward transferring module, wherein
the reception module is arranged for receiving a routing request message sent by a first network;
the acquisition module is arranged for acquiring a terminal identification to which a target mobile terminal corresponds carried in the routing request message;
the determination module is arranged for starting up the forward transferring module when it is determined that the target mobile terminal has become a user of a third network according to the terminal identification to which the target mobile terminal corresponds; and
the forward transferring module is arranged for adding a network identification of the third network in the routing request message and sending the routing request message added with the network identification of the third network to the third network.

8. The device according to claim 7, wherein the determination module is arranged for:
inquiring a local number portability database according to the terminal identification to which the target mobile terminal corresponds, and determining that the target mobile terminal has become the user of the third network, wherein
the local number portability database stores information that a mobile terminal originally belongs to a local network becomes a user of another network, and information that a mobile terminal originally belongs to another network becomes a user of the local network.

9. The device according to claim 7, wherein the forward transferring module is arranged for:
adding the network identification of the third network in the front of the terminal identification to which the target mobile terminal corresponds carried in the routing request message; or
adding the network identification of the third network behind the terminal identification to which the target mobile terminal corresponds carried in the routing request message; or
adding the network identification of the third network among the terminal identification to which the target mobile terminal corresponds carried in the routing request message.

10. The device according to any one of claims 7 to 9, further comprising a feedback module, wherein
the determination module is further arranged for starting up the feedback module when it is determined that the target mobile terminal is a user of the second network,; and
the feedback module is arranged for returning a routing response message to the first network.
